# EUROPEAN PATENT SPECIFICATION

(11) **EP 4 488 578 B1**
(45) Date of publication and mention of the grant of the patent: **15.04.2026**
(21) Application number: 24186362.0
(22) Date of filing: 03.07.2024
(51) Int. Cl.: F23D 14/02, F23N 5/08, F23N 5/14, F23N 5/16, F23N 5/24

(54) **DETECTION APPARATUS AND COMBUSTION SYSTEM**
DETEKTIONSVORRICHTUNG UND VERBRENNUNGSSYSTEM
APPAREIL DE DÉTECTION ET SYSTÈME DE COMBUSTION

(30) Priority: 07.07.2023 JP 2023112562
(43) Date of publication of application: 08.01.2025
(73) Proprietor: Yokogawa Electric Corporation, Tokyo 180-8750 (JP)
(72) Inventor: MITO, Shinya, Musashino-shi, Tokyo 180-8750 (JP)
(74) Representative: Stöckeler, Ferdinand

(56) References cited:
- EP-A1- 0 816 760
- JP-U- H0 722 251
- US-A1- 2010 318 274

## Description

### CROSS-REFERENCE TO RELATED APPLICATION

The present application claims priority to Japanese Patent Application No. 2023-112562 filed on July 7, 2023.

### TECHNICAL FIELD

The present disclosure relates to a detection apparatus and a combustion system.

### BACKGROUND

In gas turbines equipped with a combustion apparatus that uses lean premix combustion, a detection apparatus for detecting a backfire that occurs in the combustion apparatus is known. Backfire is a phenomenon in which the speed at which the flame progresses is higher than the speed of the fluid, such as fuel and air, resulting in the flame moving back up through the fluid. Although backfires can occur in principle in a gas turbine fueled by natural gas, backfires can be suppressed easily by limiting the operating conditions.

In recent years, the demand for hydrogen-fired gas turbines fueled by a mixture of natural gas and hydrogen gas, or by hydrogen gas alone, has increased with the aim of achieving a hydrogen-based society. Hydrogen gas has a higher combustion rate than natural gas. Therefore, hydrogen-fired gas turbines are more prone to backfires than gas turbines that consume natural gas as a fuel gas. As the concentration of hydrogen gas in the fuel gas is increased, the conditions under which backfires do not occur become narrower, making it difficult to completely suppress backfires during actual operation.

To suppress backfires, a combustion apparatus with a large number of burners (fuel nozzles), called a cluster burner, inside the combustion apparatus has been studied. However, as the hydrogen gas concentration of the fuel increases, it becomes difficult to completely suppress the actual occurrence of backfires despite the use of a cluster burner.

Patent Literature (PTL) 1 describes a combustion control apparatus, used in a combustion system, that stops fuel supply to a staging block containing a main fuel nozzle where flashback has occurred, based on a detection signal from a backfire detector that detects flashback.

### CITATION LIST

### Patent Literature

PTL 1: WO 2015/097861 A1
US 2010/318274 A1 discloses a combustor that includes a combustor housing defining a combustion chamber having a plurality of combustion zones. A plurality of temperature detectors is disposed in communication with the combustion chamber. The plurality of temperature detectors detects a temperature in the plurality of combustion zones. A controller communicating with the plurality of temperature detectors is programmed to determine an occurrence of a flame holding condition or a flashback condition in the plurality of combustion zones based on signals from the plurality of temperature detectors.
EP 0 816 760 A1 discloses an apparatus for detecting flashback occurrences in a premixed combustor system having at least one flame nozzle includes at least one photodetector and at least one fiber optic element coupled between the at least one photodetector and a test region of the combustor system wherein a respective flame of the flame nozzle is not present under normal operating conditions. A signal processor monitors a signal of the photodetector. The fiber optic element can include at least one optical fiber positioned within a protective tube. The fiber optic element can include two fiber optic elements coupled to the test region. The optical fiber and the protective tube can have lengths sufficient to situate the photodetector outside of an engine compartment. A plurality of flame nozzles and a plurality of fiber optic elements can be used with the fiber optic elements being coupled to respective flame nozzles and either to the photodetector or, wherein a plurality of photodetectors is used, to respective ones of the plurality of photodetectors.
JP H07 22252 U discloses a control device for a heating appliance comprising a switch section consisting of a plurality of switches which control various functions built into a heater main body , and a control circuit which receives command signals from the switch section and drives a drive circuit to carry out various functions, wherein a locking means is provided between the switch section and the control circuit, which can prohibit the acceptance of command signals from the switch section by a key switch which is opened and closed by turning a key, regardless of whether the heater is stopped or operating.

### SUMMARY

However, a conventional configuration has room for improvement in terms of ease of maintenance and ease of application to combustion apparatuses with a large number of fuel nozzles.

It would be helpful to more appropriately detect backfires in a combustion apparatus.

A detection apparatus according to the invention and its embodiments is
(1) a detection apparatus for detecting a backfire in a combustion chamber that burns fuel supplied from a supply port, the detection apparatus including:
   a conduit connected to an interior of the combustion chamber through an opening provided in a sidewall of the combustion chamber;
   a sensor configured to measure a physical quantity in the interior of the combustion chamber via the conduit; and
   a detector configured to detect a backfire in the combustion chamber based on a measured value of the physical quantity measured by the sensor, wherein
   the conduit includes an opening/closing part configured to open and close an internal space of said conduit between the combustion chamber and the sensor.

In the detection apparatus, the conduit includes the opening/closing part that can open and close the internal space between the combustion chamber and the sensor. The opening/closing part can therefore be closed and the sensor replaced while combustion in the combustion chamber continues. Furthermore, since the detection apparatus detects backfires by measuring a physical quantity with the sensor through the opening on the side of the combustion chamber, the detection apparatus can easily be applied to large-scale combustion apparatuses with a large number of fuel nozzles. Backfires can therefore more appropriately be detected in a combustion apparatus.

In an embodiment,
(2) in the detection apparatus of (1), the opening in the sidewall of the combustion chamber through which the conduit is connected to the interior of the combustion chamber may be provided at a position that is downstream from the supply port and upstream from a reference flame surface that is produced in a case in which the fuel is burned normally in the combustion chamber.

Since the conduit is thus connected at a position in the combustion chamber downstream from the supply port for the fuel and upstream from the reference flame surface that is produced in a case in which the fuel is burned normally without backfires, the sensor measures the physical quantity in a region in which the physical quantity significantly changes between the cases in which no backfire occurs and backfire does occur. The occurrence of backfires can therefore be detected with high accuracy

In an embodiment,
(3) the detection apparatus of (1) or (2) may further include a proposal interface configured to
determine a need for maintenance of the sensor based on a comparison between an average of measured values of the physical quantity measured by the sensor and a predetermined threshold, and
notify a user that maintenance of the sensor is necessary in a case in which it is determined that maintenance of the sensor is necessary.

The detection apparatus can therefore inform the user when maintenance of the sensor is necessary.

In an embodiment,
(4) the detection apparatus of (1) or (2) may further include a proposal interface configured to
estimate a timing at which maintenance of the sensor will become necessary based on a measured value of the physical quantity measured by the sensor, and
notify a user of the estimated timing.

The detection apparatus can thus inform the user of the timing at which maintenance of the sensor will become necessary.

In an embodiment,
(5) in the detection apparatus of any one of (1) to (4), the sensor may be configured to measure a temperature, a light spectrum, a pressure, or a sound pressure in the interior of the combustion chamber.

The sensor can thus be realized as a temperature sensor, a light spectrum sensor, a pressure sensor, a sound pressure sensor, or the like for the detection apparatus to detect backfires.

In an embodiment,
(6) in the detection apparatus of any one of (1) to (5), the opening/closing part may be a gate-type or ball-type valve.

By the opening/closing part thus being realized as a gate-type or ball-type valve or the like, the opening/closing part can be prevented from obstructing the optical path when the opening/closing part is open in a case in which the sensor is realized as an optical spectrum sensor.

In an embodiment,
(7) the detection apparatus of any one of (1) to (6) may further include a signal output interface configured to output, in response to detection of a backfire in the combustion chamber by the detector, a signal indicating occurrence of the backfire to a control system that controls supply of the fuel to the supply port.

Since the detection apparatus thus notifies the control system that controls supply of the fuel of the occurrence of a backfire in response to detection of the backfire, the control system can perform control, such as suspending the fuel supply, in response to the backfire.

A combustion system according to several embodiments includes
(8) a combustion chamber configured to burn fuel supplied from a supply port; and
a detection apparatus configured to detect a backfire in the combustion chamber, wherein
the detection apparatus includes
   a conduit connected to an interior of the combustion chamber through an opening provided in a sidewall of the combustion chamber,
   a sensor configured to measure a physical quantity in the interior of the combustion chamber via the conduit, and
   a detector configured to detect a backfire in the combustion chamber based on a measured value of the physical quantity measured by the sensor, and
the conduit includes an opening/closing part configured to open and close an internal space of said conduit between the combustion chamber and the sensor.

The conduit in the combustion system thus includes the opening/closing part that can open and close the internal space between the combustion chamber and the sensor. The opening/closing part can therefore be closed and the sensor replaced while combustion in the combustion chamber continues. Furthermore, since the detection apparatus detects backfires by measuring a physical quantity with the sensor through the opening on the side of the combustion chamber, the detection apparatus can easily be applied to large-scale combustion apparatuses with a large number of fuel nozzles. Backfires can therefore more appropriately be detected in a combustion apparatus.

In an embodiment,
(9) in the combustion system of (8), the combustion chamber may be supplied with fuel from discharge ports of a plurality of fuel nozzles as the supply port for the fuel.

Even when fuel is thus supplied to the combustion chamber from a plurality of fuel nozzles, backfires are detected by measuring a physical quantity inside the combustion chamber through an opening provided in the sidewall of the combustion chamber. Backfires can therefore also be detected in large-scale combustion apparatuses.

In an embodiment,
(10) in the combustion system of (8) or (9), supply of the fuel to the supply port may be controlled in response to detection of a backfire by the detection apparatus.

The fuel supply is thus controlled in response to backfire detection and can thereby prevent accidents caused by backfires.

According to an embodiment of the present invention, backfires can more appropriately be detected in a combustion apparatus.

### BRIEF DESCRIPTION OF THE DRAWINGS

In the accompanying drawings:

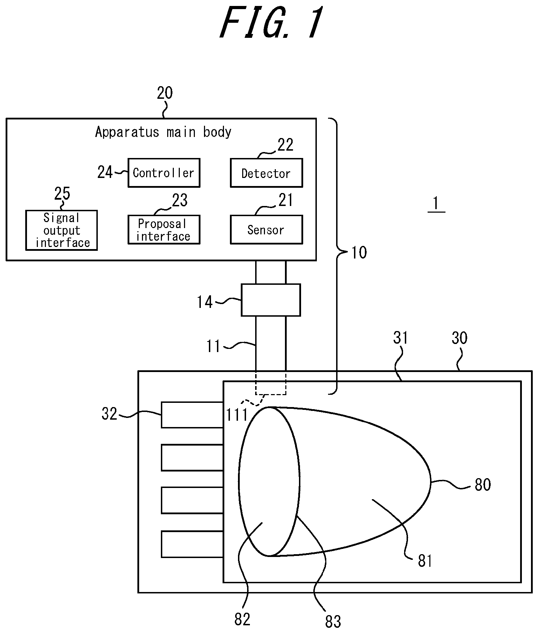

FIG. 1 is a diagram illustrating an example configuration of a combustion system according to an embodiment.

### DETAILED DESCRIPTION

### <Comparative Example>

A combustion apparatus according to a comparative example that includes a cluster burner detects the occurrence of a backfire by measuring the temperature near each burner with temperature detectors and controls the supply of fuel and air. Possible methods of detecting backfires by optical means are using an optical sensor or measuring the temperature optically with a thermopile. As use continues with such methods, dirt, including molten metal, adheres in the combustion apparatus to the sensing element, to the lens provided in the optical path between the flame, which is the source of light, and the sensing element, or to parts designed to protect the sensing element, including a viewing window. As a result, in such a combustion apparatus according to the comparative example, the light transmittance decreases with continued use, and it may become impossible to properly detect a backfire. In the case of detecting backfires by such optical means, it is therefore necessary to clean the parts in the optical path periodically. However, since the parts that become soiled in the combustion apparatus are in contact with the space inside the combustion chamber, cleaning the parts requires extensive maintenance, such as shutting down the combustion apparatus. Such maintenance cannot be frequently performed in actual operation, making it extremely difficult to detect backfires continuously by optical means.

In a combustion apparatus with a large number of burners, such as a hydrogen gas-fueled combustion apparatus with a cluster burner, the same number of temperature sensors and corresponding wiring as the number of burners is required to detect a backfire in each burner. This makes it difficult to install such temperature sensors and wiring in a combustion apparatus with limited space. In the combustion apparatus according to the comparative example, the number of burners therefore limits the applicable range of the configuration for detecting backfires.

It would be helpful to enable proper detection of backfires over an extended period of time without extensive maintenance and without setting an upper limit on the number of burners in the combustion apparatus.

### <Embodiment>

An embodiment of the present invention is now described with reference to the drawings. Portions having an identical configuration or function in the drawings are labeled with the same reference signs. In the explanation of the present embodiment, a redundant description of identical portions may be omitted or simplified as appropriate.

FIG. 1 is a diagram illustrating an example configuration of a combustion system 1 according to an embodiment. The combustion system 1 includes a detection apparatus 10 and a combustion apparatus 30. The combustion apparatus 30 combusts a mixed gas that includes air and fuel gas. The detection apparatus 10 detects backfires in the combustion apparatus 30. A backfire is a flame, in a combustion chamber 31, that travels in a fuel nozzle 32 in the direction from the combustion chamber 31 toward the interior of the fuel nozzle 32.

The combustion apparatus 30 includes a combustion chamber 31 and a plurality of fuel nozzles 32. The fuel nozzle 32 includes a fuel supply port and supplies a mixed gas including air and fuel gas to the combustion chamber 31. The combustion chamber 31 has a space in which the mixed gas supplied from the fuel nozzle 32 is burned. In the present embodiment, the fuel is hydrogen gas, but this configuration is not limiting. For example, the fuel may be a mixed gas including hydrogen gas and natural gas, the fuel may be natural gas, or the fuel may be any fluid usable as fuel. In the present embodiment, the combustion apparatus 30 includes a plurality of fuel nozzles 32, but the number of fuel nozzles 32 may be one.

When the combustion apparatus 30 performs combustion operations, each fuel nozzle 32 supplies fuel to the combustion chamber 31. The supplied fuel is burned in the combustion chamber 31 and forms a flame 80. The flame 80 has an outer flame 81, an inner flame 82, and a flame surface 83. The outer flame 81 is a high-temperature region of the flame 80. The inner flame 82 is a low-temperature region of the flame 80. The flame surface 83 is a boundary surface of the flame 80, close to the fuel nozzle 32. The flame surface 83 in the case of normal combustion without backfire in the combustion chamber 31 may hereinafter be referred to as the "reference flame surface". Generally, the higher temperature outer flame 81 is formed near the tip of the flame 80, away from the fuel nozzle 32. The lower temperature inner flame 82 is formed near the flame surface 83, closer to the fuel nozzle 32. As described below, when a backfire occurs, the flame surface 83 moves upstream from the reference flame surface. Therefore, the detection apparatus 10 measures the physical quantity at a position that is downstream from the end of the fuel nozzle 32 facing the combustion chamber 31 and upstream from the reference flame surface, and detects a backfire by a change in the measured physical quantity.

The detection apparatus 10 includes a conduit 11 and an apparatus main body 20. The apparatus main body 20 includes a sensor 21, a detector 22, a proposal interface 23, a controller 24, and a signal output interface 25.

The conduit 11 is a hollow member that communicates between the interior of the combustion chamber 31 and the sensor 21 of the apparatus main body 20. As illustrated in FIG. 1, the conduit 11 connects to the interior of the combustion chamber 31 through an opening 111 in the sidewall of the combustion chamber 31. The conduit 11 includes an opening/closing part 14 that can open and close the internal space of the conduit 11 between the combustion chamber 31 and the sensor 21.

The sensor 21 measures a physical quantity in the interior of the combustion chamber 31 via the internal space of the conduit 11. The detector 22 detects a backfire in the combustion chamber 31 based on a measured value of the physical quantity measured by the sensor 21. For example, the sensor 21 may be configured by a thermopile (temperature sensor), an optical sensor (light spectrum sensor), a pressure sensor, or an acoustic sensor (sound pressure sensor). A thermopile is a temperature sensor formed by a large number of minute thermocouples, arranged in a plane, that measure temperature using infrared radiation. The thermopile measures the temperature at a predetermined position separated from the thermopile by a space. In the case of the sensor 21 being a thermopile, the detector 22 detects a backfire based on the temperature measured by the sensor 21. An optical sensor measures light emitted from a predetermined position. In the case of the sensor 21 being an optical sensor, the detector 22 detects a backfire at a predetermined position based on a received light spectrum. A pressure sensor measures the pressure in the combustion chamber 31. In the case of the sensor 21 being a pressure sensor, the detector 22 detects a backfire based on a change in pressure. An acoustic sensor measures a sound pressure spectrum. In the case of the sensor 21 being an acoustic sensor, the detector 22 detects a backfire based on a change in the sound pressure spectrum.

The opening 111 may be provided at a position to face the flame surface 83 during normal operation so that the sensor 21 and the detector 22 can detect a backfire due to movement of the flame surface 83 in the combustion chamber 31. For example, the opening 111 may be provided on a side of the combustion chamber 31 to allow observation of a position that is downstream from the end, facing the combustion chamber 31, of the fuel nozzle 32 forming the combustion apparatus 30 and is upstream from the flame surface 83 (reference flame surface) during normal operation.

The opening/closing part 14 is a valve that does not obstruct the optical path between the flame 80 in the combustion chamber 31 and the sensor 21. For example, the opening/closing part 14 may be a gate-type or ball-type valve.

The proposal interface 23 proposes to the user the timing of cleaning, replacement, or the like of the sensor 21. Specifically, the proposal interface 23 may determine whether maintenance of the sensor 21 is necessary based on a comparison between an average of measured values of the physical quantity measured by the sensor 21 and a predetermined threshold. In a case in which maintenance of the sensor 21 is determined to be necessary, the proposal interface 23 may notify the user that maintenance of the sensor 21 is necessary. For example, the proposal interface 23 may display an image indicating that maintenance is necessary on the display or output an alarm sound from the speaker. Alternatively, the proposal interface 23 may transmit, by predetermined communication means, information indicating that maintenance is necessary to a computer used by the user.

The controller 24 includes one or more processors. The controller 24 controls the operations of each component of the detection apparatus 10. For example, the controller 24 may control the opening and closing of the opening/closing part 14. In addition to controlling the operations of the detection apparatus 10, the controller 24 may also control the operations of the combustion apparatus 30. For example, in response to the detection of a backfire, the controller 24 may control the fuel dispensed from the fuel nozzle 32.

In response to the detection of a backfire in the combustion chamber 31 by the detector 22, the signal output interface 25 outputs a signal indicating the occurrence of a backfire to a control system that controls the supply of fuel to the fuel nozzle 32.

Each component of the apparatus main body 20 may be realized by a processor executing a program.

In a case in which the temperature of the air in the combustion chamber 31 is higher than the rated temperature of the opening/closing part 14, the distance between the opening/closing part 14 and the combustion chamber 31 may be increased by extending the conduit 11 to a suitable length to reduce the temperature of the air at the opening/closing part 14.

In the detection apparatus 10, the conduit 11 includes the opening/closing part 14 that can open and close the internal space between the combustion chamber 31 and the sensor 21. The opening/closing part 14 can therefore be closed and the sensor 21 replaced while combustion in the combustion chamber 31 continues. Furthermore, since the detection apparatus 10 detects backfires by measuring a physical quantity with the sensor 21 through the opening 111 on the side of the combustion chamber 31, the detection apparatus 10 can easily be applied to a large-scale combustion apparatus 30 with a large number of fuel nozzles 32. Therefore, according to the combustion system 1, backfires can be properly detected over an extended period of time without extensive maintenance and without setting an upper limit on the number of fuel nozzles 32 in the combustion apparatus 30.

Next, details on the operations of the detection apparatus 10 according to the present embodiment are described. A backfire is the movement of the flame surface 83 in the direction of the fuel nozzle 32.

In a case in which the sensor 21 is a thermopile, the sensor 21 measures the temperature of the inner flame 82, which is the low-temperature region in the flame 80, when the combustion apparatus 30 is performing normal combustion that does not include backfires. When a backfire occurs, the flame surface 83 moves toward the fuel nozzle 32. As a result, the sensor 21 measures the temperature of the outer flame 81, which is the high-temperature region in the flame 80. The detection apparatus 10 detects a backfire from such a change in temperature measurement.

In a case in which the sensor 21 is an optical sensor, the sensor 21 measures the optical spectrum of the inner flame 82 when the combustion apparatus 30 is performing normal combustion that does not include backfires. When a backfire occurs, the flame surface 83 moves toward the fuel nozzle 32. As a result, the sensor 21 measures the optical spectrum of the outer flame 81. The detection apparatus 10 detects a backfire from such a change in optical spectrum.

In the case in which the sensor 21 is a pressure sensor, the pressure in the combustion chamber 31 fluctuates when a backfire occurs in the combustion chamber 31. The detection apparatus 10 therefore detects a backfire according to the measurement of such a pressure fluctuation.

In a case in which the sensor 21 is an acoustic sensor, if a backfire occurs in the combustion chamber 31, a detonation state occurs due to movement of the flame 80 above the speed of sound. Therefore, when a backfire occurs, the ambient sound pressure spectrum changes and an explosion sound is detected outside. The detection apparatus 10 therefore detects the backfire according to the measured change in the sound pressure spectrum corresponding to such an explosion sound.

When the detection apparatus 10 is used for a long period of time, dirt such as molten metal in the combustion chamber 31 adheres to the portion of the sensor 21 that faces the space in the combustion chamber 31. This reduces the detection sensitivity of the physical quantities, such as light (including infrared radiation), pressure, and sound pressure, that can be measured by the sensor 21 and reduces the ability of the detection apparatus 10 to detect backfires. In a case in which the performance of the detection apparatus 10 is reduced, the opening/closing part 14 may be closed to close off the internal space of the conduit 11. By closing the opening/closing part 14, the sensor 21 can be safely removed from the conduit 11 and the sensor 21 can be cleaned, even if the combustion apparatus 30 is in operation. Furthermore, by reattaching the sensor 21 to the conduit 11 and opening the opening/closing part 14, the detection apparatus 10 can be operated again.

As dirt adheres to the sensor 21, the detection sensitivity of the physical quantity that can be measured by the sensor 21 decreases. Therefore, the proposal interface 23 may determine that maintenance is necessary in a case in which the average of the measured values of the physical quantity measured by the sensor 21 falls below a predetermined threshold. In a case in which maintenance of the sensor 21 is determined to be necessary, the proposal interface 23 may notify the user that maintenance of the sensor 21 is necessary. Furthermore, the proposal interface 23 may periodically measure the average of the measured values of the physical quantity measured by the sensor 21, predict the timing for replacement of the sensor 21 based on the change in the average, and notify the user.

The sensor 21 may be equipped with any two or more sensors, including thermopiles, optical sensors, pressure sensors, and acoustic sensors, and the detector 22 may detect a backfire based on the measurements of each sensor. This enables the detection apparatus 10 to detect backfires with high accuracy.

As described above, the detection apparatus 10 detects a backfire in the combustion chamber 31 that burns fuel supplied from a supply port (fuel nozzle 32). The detection apparatus 10 includes the conduit 11, the sensor 21, and the detector 22. The conduit 11 connects to the interior of the combustion chamber 31 through the opening 111 in the sidewall of the combustion chamber 31. The sensor 21 measures a physical quantity in the interior of the combustion chamber 31 via the conduit 11. The detector 22 detects a backfire in the combustion chamber 31 based on a measured value of the physical quantity measured by the sensor 21. Here, the conduit 11 includes the opening/closing part 14 that can open and close the internal space of the conduit 11 between the combustion chamber 31 and the sensor 21.

The conduit 11 of the detection apparatus 10 thus includes the opening/closing part 14 that can open and close the internal space of the conduit 11 between the combustion chamber 31 and the sensor 21. When the detection apparatus 10 is used for an extended period of time, dirt adheres to the sensor 21 and the ability to detect backfires decreases. By closing the opening/closing part 14, however, the sensor 21 can be removed even while the combustion apparatus 30 is operating, and the sensor 21 can be cleaned or replaced. This enables the detection apparatus 10 to continue detecting backfires over an extended period of time without extensive maintenance. Furthermore, the detection apparatus 10 can remotely monitor for backfires in the plurality of fuel nozzles 32 via the conduit 11 and does not require wiring within the combustion apparatus 30. Therefore, the detection apparatus 10 can properly detect backfires without the need to set an upper limit on the number of fuel nozzles 32 in the combustion apparatus 30.

The opening 111 in the sidewall of the combustion chamber 31 through which the conduit 11 is connected to the interior of the combustion chamber 31 may be provided at a position that is downstream from the supply port (fuel nozzle 32) and upstream from a reference flame surface that is produced in a case in which the fuel is burned in the combustion chamber 31. As described above, the reference flame surface is the flame surface 83 in the case in which normal combustion is taking place in the combustion chamber 31 without a backfire. In this case, the sensor 21 measures the physical quantity in a region in which the physical quantity significantly changes between the cases in which no backfire occurs and backfire does occur. According to such a detection apparatus 10, the occurrence of backfires can therefore be detected with high accuracy.

The proposal interface 23 may determine whether maintenance of the sensor 21 is necessary based on a comparison between an average of measured values of the physical quantity measured by the sensor 21 and a predetermined threshold, and in a case in which it is determined that maintenance is necessary, may notify the user accordingly. Maintenance of the sensor 21 may include cleaning or replacement of the sensor 21. Therefore, according to this configuration, the user can know when maintenance of the sensor 21 is necessary.

The proposal interface 23 may also estimate the timing at which maintenance of the sensor 21 will become necessary based on the measured value of the physical quantity measured by the sensor 21 and notify the user of the estimated timing. For example, the detection apparatus 10 may acquire in advance change data regarding changes in measured values of the physical quantity due to use of the sensor 21 over time, compare the values measured by the sensor 21 with the change data, and estimate when maintenance will become necessary. According to this configuration, the user can know when maintenance of the sensor 21 will be necessary and can make a maintenance plan.

The sensor 21 may be configured to measure a temperature, a light spectrum, a pressure, or a sound pressure in the interior of the combustion chamber 31. According to this configuration, the detection apparatus 10 can detect a backfire in the combustion chamber 31 using various physical quantities.

The opening/closing part 14 can be a gate-type (sliding) or ball-type (rotating ball with holes) valve. It is possible to realize the opening/closing part 14 by a gate-type or ball-type valve or the like to detect a backfire. In a case in which the sensor 21 is realized by a thermopile or optical sensor, the opening/closing part 14 can be realized by a gate-type or ball-type valve to measure a physical quantity without interfering with the optical path. In a case in which the sensor 21 is realized by a sensor that does not use light, the opening/closing part 14 may be realized by any appropriate valve.

In response to the detection of a backfire in the combustion chamber 31 by the detector 22, the controller 24 may output a signal from the signal output interface 25 indicating the occurrence of a backfire to a control system that controls the supply of fuel to the supply port. Since the detection apparatus 10 notifies the control system that controls supply of the fuel of the occurrence of a backfire in response to detection of the backfire, the control system can perform control, such as suspending the fuel supply, in response to the backfire.

In the combustion system 1, the combustion chamber 31 may be supplied with fuel from discharge ports of a plurality of fuel nozzles 32 as the supply port for the fuel. In this way, even in a case in which fuel is supplied to the combustion chamber 31 from the plurality of fuel nozzles 32, the combustion system 1 detects a backfire by measuring a physical quantity in the interior of the combustion chamber 31 through the opening 111 in the sidewall of the combustion chamber 31. According to the combustion system 1, backfires can therefore be detected even in a large-scale combustion apparatus 30.

The combustion system 1 may control the supply of fuel to the supply port in response to the detection of a backfire by the detection apparatus 10. The combustion system 1 thus controls the fuel supply in response to backfire detection and can thereby prevent accidents caused by backfires.

The present disclosure is not limited to the above embodiments. For example, a plurality of blocks described in the block diagrams may be integrated, or a block may be divided. Other modifications can be made without departing from the present invention defined by the claims.

## Claims

1. A detection apparatus (10) for detecting a backfire in a combustion chamber (31) that burns fuel supplied from a supply port, the detection apparatus (10) comprising:
a conduit (11) connected to an interior of the combustion chamber (31) through an opening (111) provided in a sidewall of the combustion chamber (31);
a sensor (21) configured to measure a physical quantity in the interior of the combustion chamber (31) via the conduit (11); and
a detector (22) configured to detect a backfire in the combustion chamber (31) based on a measured value of the physical quantity measured by the sensor (21), wherein
the conduit (11) comprises an opening/closing part (14) configured to open and close an internal space of said conduit (11) between the combustion chamber (31) and the sensor (21).

2. The detection apparatus (10) according to claim 1, wherein the opening (111) in the sidewall of the combustion chamber (31) through which the conduit (11) is connected to the interior of the combustion chamber (31) is provided at a position that is downstream from the supply port and upstream from a reference flame surface that is produced in a case in which the fuel is burned normally in the combustion chamber (31).

3. The detection apparatus (10) according to claim 1 or 2, further comprising a proposal interface (23) configured to
determine a need for maintenance of the sensor (21) based on a comparison between an average of measured values of the physical quantity measured by the sensor (21) and a predetermined threshold, and
notify a user that maintenance of the sensor (21) is necessary in a case in which it is determined that maintenance of the sensor (21) is necessary.

4. The detection apparatus (10) according to claim 1 or 2, further comprising a proposal interface (23) configured to
estimate a timing at which maintenance of the sensor (21) will become necessary based on a measured value of the physical quantity measured by the sensor (21), and
notify a user of the estimated timing.

5. The detection apparatus (10) according to any one of claims 1 to 4, wherein the sensor (21) is configured to measure a temperature, a light spectrum, a pressure, or a sound pressure in the interior of the combustion chamber (31).

6. The detection apparatus (10) according to any one of claims 1 to 5, wherein the opening/closing part (14) is a gate-type or ball-type valve.

7. The detection apparatus (10) according to any one of claims 1 to 6, further comprising a signal output interface (25) configured to output, in response to detection of a backfire in the combustion chamber (31) by the detector (22), a signal indicating occurrence of the backfire to a control system that controls supply of the fuel to the supply port.

8. A combustion system comprising the combustion chamber (31) and the detection apparatus (10) according to any one of the claims 1 to 7

9. The combustion system according to claim 8, wherein the combustion chamber (31) is supplied with fuel from discharge ports of a plurality of fuel nozzles (32) as the supply port for the fuel.

10. The combustion system according to claim 8 or 9, wherein supply of the fuel to the supply port is controlled in response to detection of a backfire by the detection apparatus (10).

## Patentansprüche

1. Eine Erfassungsvorrichtung (10) zum Erfassen eines Flammenrückschlags in einer Verbrennungskammer (31), die Kraftstoff verbrennt, der aus einem Versorgungsanschluss versorgt wird, wobei die Erfassungsvorrichtung (10) folgende Merkmale aufweist:
eine Leitung (11), die über eine Öffnung (111), die in einer Seitenwand der Verbrennungskammer (31) bereitgestellt ist, mit einem Inneren der Verbrennungskammer (31) verbunden ist;
einen Sensor (21), der dazu konfiguriert ist, über die Leitung (11) eine physikalische Größe in dem Inneren der Verbrennungskammer (31) zu messen; und
einen Detektor (22), der dazu konfiguriert ist, einen Flammenrückschlag in der Verbrennungskammer (31) basierend auf einem Messwert der physikalischen Größe zu erfassen, der durch den Sensor (21) gemessen wurde, wobei
die Leitung (11) ein Öffnungs-/Schließteil (14) aufweist, das dazu konfiguriert ist, einen Innenraum der Leitung (11) zwischen der Verbrennungskammer (31) und dem Sensor (21) zu öffnen und zu schließen.

2. Die Erfassungsvorrichtung (10) gemäß Anspruch 1, wobei die Öffnung (111) in der Seitenwand der Verbrennungskammer (31), durch welche die Leitung (11) mit dem Inneren der Verbrennungskammer (31) verbunden ist, an einer Position bereitgestellt ist, die sich stromabwärts von dem Versorgungsanschluss und stromaufwärts von einer Referenzflammenoberfläche befindet, die in einem Falle erzeugt wird, in dem Kraftstoff auf normale Art und Weise in der Verbrennungskammer (31) verbrannt wird.

3. Die Erfassungsvorrichtung (10) gemäß Anspruch 1 oder 2, die ferner eine Vorschlagschnittstelle (23) aufweist, die konfiguriert ist zum
Bestimmen einer Notwendigkeit der Wartung des Sensors (21) basierend auf einem Vergleich zwischen einem Durschnitt von Messwerten der physikalischen Größe, die durch den Sensor (21) gemessen werden, und einem vorbestimmten Schwellenwert, und
Benachrichtigen eines Benutzers, dass eine Wartung des Sensors (21) notwendig ist, in einem Fall, in dem bestimmt wird, dass eine Wartung des Sensors (21) notwendig ist.

4. Die Erfassungsvorrichtung (10) gemäß Anspruch 1 oder 2, die ferner eine Vorschlagschnittstelle (23) aufweist, die konfiguriert ist zum
Schätzen eines Zeitpunkts, zu dem eine Wartung des Sensors (21) notwendig werden wird, basierend auf einem Messwert der physikalischen Größe, der durch den Sensor (21) gemessen wird, und
Benachrichtigen eines Benutzers von dem geschätzten Zeitpunkt.

5. Die Erfassungsvorrichtung (10) gemäß einem der Ansprüche 1 bis 4, wobei der Sensor (21) dazu konfiguriert ist, eine Temperatur, ein Lichtspektrum, einen Druck oder einen Schalldruck in dem Inneren der Verbrennungskammer (31) zu messen.

6. Die Erfassungsvorrichtung (10) gemäß einem der Ansprüche 1 bis 5, wobei das Öffnungs-/Schließteil (14) ein Schieber-Typ- oder Kugel-Typ-Ventil ist.

7. Die Erfassungsvorrichtung (10) gemäß einem der Ansprüche 1 bis 6, die ferner eine Signalausgabeschnittstelle (25) aufweist, die dazu konfiguriert ist, ansprechend auf das Erfassen eines Flammenrückschlags in der Verbrennungskammer (31) durch den Detektor (22) ein Signal auszugeben, das einem Steuersystem, das ein Versorgen des Versorgungsanschlusses mit Kraftstoff steuert, ein Auftreten des Flammenrückschlags anzeigt.

8. Ein Verbrennungssystem, das die Verbrennungskammer (31) und die Erfassungsvorrichtung (10) gemäß einem der Ansprüche 1 bis 7 aufweist.

9. Das Verbrennungssystem gemäß Anspruch 8, wobei die Verbrennungskammer (31) mit Kraftstoff aus Auslassanschlüssen einer Mehrzahl von Kraftstoffdüsen (32) als dem Versorgungsanschluss für den Kraftstoff versorgt wird.

10. Das Verbrennungssystem gemäß Anspruch 8 oder 9, wobei das Versorgen des Versorgungsanschlusses mit Kraftstoff ansprechend auf das Erfassen eines Flammenrückschlags durch die Erfassungsvorrichtung (10) gesteuert wird.

## Revendications

1. Dispositif de détection (10) pour détecter un retour de flamme dans une chambre de combustion (31) qui brûle du carburant fourni par un orifice d'alimentation, le dispositif de détection (10) comprenant :
un conduit (11) relié à l'intérieur de la chambre de combustion (31) par une ouverture (111) prévue dans une paroi latérale de la chambre de combustion (31) ;
un capteur (21) configuré pour mesurer une quantité physique à l'intérieur de la chambre de combustion (31) via le conduit (11) ; et
un détecteur (22) configuré pour détecter un retour de flamme dans la chambre de combustion (31) sur la base d'une valeur mesurée de la quantité physique mesurée par le capteur (21), dans lequel
le conduit (11) comprend une partie d'ouverture/de fermeture (14) configurée pour ouvrir et fermer un espace interne dudit conduit (11) entre la chambre de combustion (31) et le capteur (21).

2. Dispositif de détection (10) selon la revendication 1, dans lequel l'ouverture (111) dans la paroi latérale de la chambre de combustion (31) à travers laquelle le conduit (11) est relié à l'intérieur de la chambre de combustion (31) est prévue à une position qui est en aval de l'orifice d'alimentation et en amont d'une surface de flamme de référence qui est produite dans un cas où le combustible est brûlé normalement dans la chambre de combustion (31).

3. Appareil de détection (10) selon la revendication 1 ou 2, comprenant en outre une interface de proposition (23) configurée pour
déterminer la nécessité d'entretenir le capteur (21) sur la base d'une comparaison entre une moyenne des valeurs mesurées de la grandeur physique mesurée par le capteur (21) et un seuil prédéterminé, et
informer un utilisateur que la maintenance du capteur (21) est nécessaire dans le cas où il est déterminé que la maintenance du capteur (21) est nécessaire.

4. Appareil de détection (10) selon la revendication 1 ou 2, comprenant en outre une interface de proposition (23) configurée pour
estimer un moment auquel l'entretien du capteur (21) deviendra nécessaire sur la base d'une valeur mesurée de la grandeur physique mesurée par le capteur (21), et
informer un utilisateur du délai estimé.

5. Dispositif de détection (10) selon l'une quelconque des revendications 1 à 4, dans lequel le capteur (21) est configuré pour mesurer une température, un spectre lumineux, une pression ou une pression acoustique à l'intérieur de la chambre de combustion (31).

6. Dispositif de détection (10) selon l'une quelconque des revendications 1 à 5, dans lequel la partie d'ouverture/de fermeture (14) est une vanne de type à clapet ou à bille.

7. Dispositif de détection (10) selon l'une quelconque des revendications 1 à 6, comprenant en outre une interface de sortie de signal (25) configurée pour émettre, en réponse à la détection d'un retour de flamme dans la chambre de combustion (31) par le détecteur (22), un signal indiquant la survenue du retour de flamme à un système de commande qui commande l'alimentation en carburant vers l'orifice d'alimentation.

8. Système de combustion comprenant la chambre de combustion (31) et le dispositif de détection (10) selon l'une quelconque des revendications 1 à 7

9. Système de combustion selon la revendication 8, dans lequel la chambre de combustion (31) est alimentée en combustible à partir des orifices de décharge d'une pluralité de buses de combustible (32) servant d'orifice d'alimentation en combustible.

10. Système de combustion selon la revendication 8 ou 9, dans lequel l'alimentation en carburant vers l'orifice d'alimentation est contrôlée en réponse à la détection d'un retour de flamme par le dispositif de détection (10).
